# EUROPEAN PATENT SPECIFICATION

(11) **EP 4 544 907 B1**
(45) Date of publication and mention of the grant of the patent: **25.11.2026**
(21) Application number: 23830879.5
(22) Date of filing: 19.05.2023
(51) Int. Cl.: A01M 7/00, A47L 13/17, A01N 35/04, A01P 7/02, A47L 13/256

(54) **CLEANING WET WIPE**
REINIGENDES FEUCHTTUCH
LINGETTE HUMIDE DE NETTOYAGE

(30) Priority: 27.06.2022 JP 2022102839
(43) Date of publication of application: 30.04.2025
(73) Proprietor: Daio Paper Corporation, Shikokuchuo-shi, Ehime 799-0492 (JP)
(72) Inventor: YAMASAKI, Yuhei, Shikokuchuo-shi, Ehime 799-0113 (JP)
(74) Representative: Bandpay & Greuter
(86) International application number: PCT/JP2023/018767
(87) International publication number: WO 2024/004427

(56) References cited:
- WO-A1-2021/064855
- WO-A1-2021/064855
- CN-A- 104 255 824
- JP-A- 2004 081 840
- JP-A- 2004 081 840
- JP-A- 2020 111 563
- JP-A- 2022 072 485
- JP-A- 2022 072 485
- US-A1- 2021 023 589

## Description

### TECHNICAL FIELD

The present invention relates to a cleaning wet wipe capable of imparting an effect of repelling house dust acarines to a cleaning target surface after being wiped clean.

### BACKGROUND ART

In the related art, cleaning wipes of a dry type that are impregnated with components repelling house dust acarines are known (see Patent Documents 1 and 2, for example).
Since the components repelling acarines are rubbed onto the cleaning target surface by wiping it with the cleaning wipes, it is possible to impart the effect of repelling house dust acarines to the cleaning target surface after being wiped clean.

### CITATION LIST

### Patent Literature

Patent Document 1: JP 2020-111563A
Patent Document 2: Japanese Patent No. 5004468
Patent Document 3: JP 2022 072485 A, corresponding to the preamble of independent claim 1

### SUMMARY OF INVENTION

### Technical Problem

However, since the cleaning wipes of Patent Documents 1 and 2 described above are of the dry type, the cleaning wipes are not suitable for wiping off or wiping out sebum and oil stains adhering to the cleaning target surface although it is possible to remove dirt and dust from the cleaning target surface by capturing the dirt and dust with the cleaning wipe.

Also, the components of repelling acarines with which the cleansing wipes of Patent Documents 1 and 2 described above are impregnated are organic acid esters and have poor solubility in water, and it is thus difficult to develop the cleansing wipes to those of a wet type.

Also, chemical solutions with which cleaning wipes (wet type) for the purpose of wiping off sebum and oil stains are impregnated are typically weakly alkaline, drug efficacy thereof may not be sufficiently exhibited due to hydrolysis of organic acid esters or the like even if the cleaning wipes of Patent Documents 1 and 2 described above are developed into those of a wet type.

An object of the present invention is to provide a cleaning wet wipe capable of imparting an effect of repelling house dust acarines to a cleaning target surface after being wiped clean.

### Solution to Problem

In order to solve the above problem, the invention according to aspect 1 is
a cleaning wet wipe obtained by impregnating a base paper sheet with a chemical solution,
in which the chemical solution contains at least xanthoxylin.

According to the invention of aspect 2, in the cleaning wet wipe according to aspect 1,
the chemical solution includes water as a solvent and contains at least one of ethanol and a surfactant.

According to the invention of aspect 3, in the cleaning wet wipe according to aspect 1,
the chemical solution is adjusted to be weakly alkaline.

According to the invention of aspect 4, in the cleaning wet wipe according to any one of aspects 1 to 3,
a plurality of projecting embossed parts which are embossed parts projecting from a first surface and a plurality of recessed embossed parts which are embossed parts projecting from a second surface are formed in the base paper sheet.

### Advantageous Effects of Invention

According to the present invention, a cleaning wet wipe capable of imparting an effect of repelling house dust acarines to a cleaning target surface after being wiped clean.

### BRIEF DESCRIPTION OF DRAWINGS

[FIG. 1] This is a perspective view illustrating a cleaning tool to which a cleaning wet wipe according to the present embodiment is attached.
[FIG. 2] This is a plan view illustrating the cleaning wet wipe according to the present embodiment.
[FIG. 3] This is an explanatory diagram related to an acarine repellency test.

### DESCRIPTION OF EMBODIMENT

Hereinafter, a cleaning wet wipe 100 according to an embodiment of the present invention will be described with reference to the drawings. However, the technical scope of the present invention is not limited to the illustrated example and is determined merely on the basis of the description of the claims.

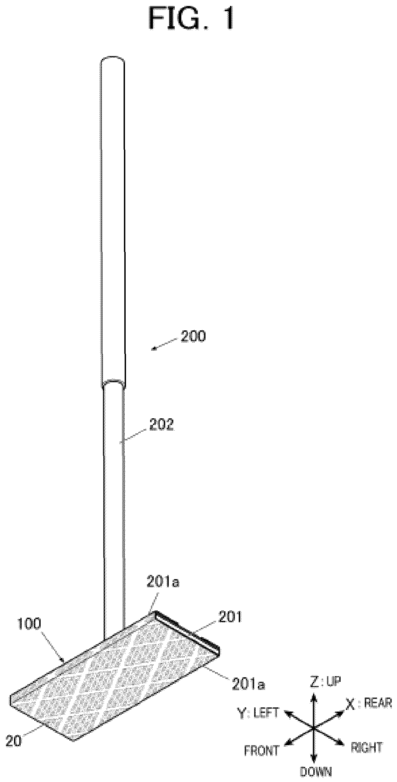

Note that the following description will be given by defining front-back, left-right, up-down, an X direction, a Y direction, and a Z direction as illustrated in FIG. 1. Also, "... to ..." in the specification will be used as a meaning of including numerical values described before and after "to" as a lower limit value and an upper limit value.

### (1. Description of configuration)

First, a configuration of the cleaning wet wipe 100 will be described.

### ((1) State during use)

As illustrated in FIG. 1, the cleaning wet wipe 100 is a sheet that is attached, in an exchangeable manner, to a cleaning tool 200 including a head portion 201 with a rectangular flat plate shape and a handle portion 202 that is attached to an upper surface of the head portion 201, for example, and is used mainly to clean a floor surface, and is a sheet obtained by impregnating a base paper sheet with a chemical solution.

Using the cleaning wet wipe 100 by attaching it to the head portion 201 of the cleaning tool 200 including the long bar-shaped handle portion 202 facilitate wiping of a floor surface in a living space, such as a wooden floor or a Japanese straw mat, off course and also a floor surface covered by furniture, home appliances, or the like (a floor surface in a gap).

Note that the base paper sheet described here means a state of the cleaning wet wipe 100 before the impregnation with the chemical solution.

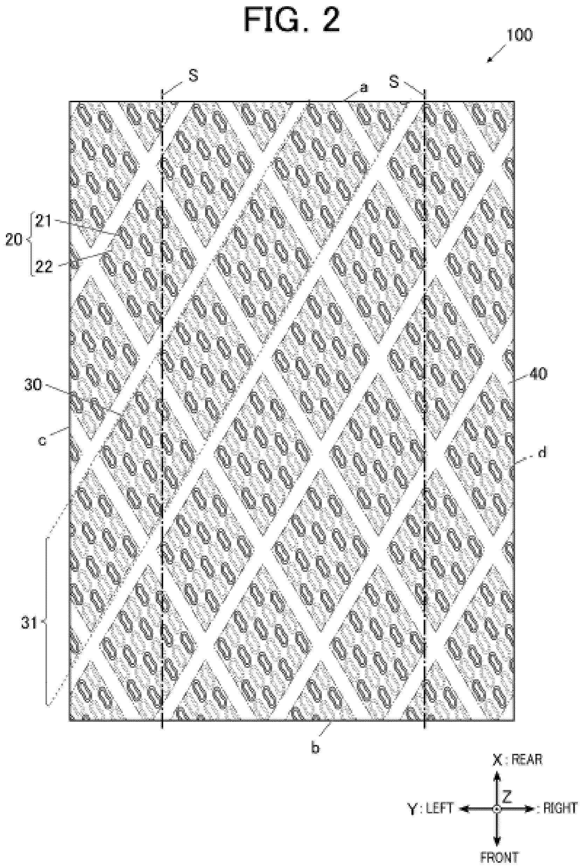

The cleaning wet wipe 100 is formed into a rectangular shape as illustrated in FIG. 2 and has a cleaning surface covering a bottom surface of the head portion 201 of the cleaning tool 200.

Specifically, the cleaning wet wipe 100 is used in a state where the cleaning wet wipe 100 covers the bottom surface of the head portion 201 of the cleaning tool 200 with the cleaning surface, is folded at fold lines S along longitudinal edge portions 201a of the head portion 201 of the cleaning tool 200, is locked at an upper surface of the head portion 201, and is attached to the cleaning tool 200 as illustrated in FIG. 1.

Note that the longitudinal edge portions 201a denote edge portions along the longitudinal direction of the head portion 201. In other words, the longitudinal edge portions 201a denote two longer edge portions among the four edge portions of the head portion 201 with the rectangular shape.

### ((2) Base paper sheet)

The base paper sheet is a non-woven cloth manufactured by bonding predetermined fibers by a known technique such as spunlace, air-through, air-laid, point-bond, spunbond, or needle punch.

Specifically, a non-woven cloth manufactured by mixing hydrophilic fibers and hydrophobic fibers and bonding these fibers, for example, is used as the base paper sheet.

### (a. Hydrophilic fibers)

It is possible to use, as the hydrophilic fibers, natural fibers such as cotton, pulp, or hemp, recycled fibers such as rayon or cupro, or the like, and it is preferable to use pulp, rayon, polypropylene spunbond fibers (PPSB), or the like from the viewpoint of maintaining water retention properties.

Also, a blending ratio of the hydrophilic fibers in the fibers constituting the base paper sheet is preferably from 35% by mass to 75% by mass.

### (b. Hydrophobic fibers)

Examples of the hydrophobic fibers include polyolefin-based fibers such as polyethylene (PE), polypropylene (PP), and polyvinyl alcohol, polyester-based fibers such as polyethylene terephthalate (PET) and polybutylene terephthalate (PBT), acrylic fiber, and the like, and one of these can be used alone, or two or more kinds of these can be used in combination. Examples of composite fibers of two or more kinds include a core-in-sheath type including a resin (low-melting-point resin) having a relatively low melting point as a sheath portion and a resin (high-melting-point resin) having a relatively high melting point as a core portion, a sideback type in which a low-melting-point resin and a high-melting-point resin are aligned in a predetermined direction, and the like.

Also, a blending ratio of the hydrophobic fibers in the fibers constituting the base paper sheet is preferably from 25% by mass to 65% by mass.

### (c. Basis weight)

The basis weight of the base paper sheet is preferably from 50 g/m² to 100 g/m² from the viewpoint of achieving both a contamination retention ability and sheet flexibility. Note that the basis weight is a paper weight measured in accordance with JIS P8124:2011.

### ((3) Chemical solution)

As the chemical solution with which the base paper sheet as described above is impregnated, a chemical solution that is weakly alkaline at a hydrogen ion index (pH) of 8.0 to 9.0 and contains at least xanthoxylin is used.

Xanthoxylin is a plant-derived component contained in pericarp of Sichuan pepper, Japanese pepper, Triadica sebifera, Blumea balsamifera (sambong), a pomegranate, and the like and can be used as an acarine repellent.

In the chemical solution, the content of xanthoxylin is preferably equal to or greater than 0.01% by mass and equal to or less than 0.02% by mass. Within this range, a manufacturing cost is reduced within a proper range, and a satisfactory acarine repellent effect is exhibited. The acarine repellent effect described here is an effect of repelling house dust acarines.

Also, the chemical solution includes water as a solvent and contains at least one of ethanol and a surfactant. More preferably, the chemical solution contains both ethanol and a surfactant.

The chemical solution including water as a solvent contains at least one of ethanol and a surfactant and thus makes it easy to dissolve xanthoxylin in the chemical solution.

Also, 150% by mass to 450% by mass, preferably 180% by mass to 350% by mass of chemical agent is used for impregnation with respect to the mass of the base paper sheet when the base paper sheet is dried.

The dried base paper sheet is impregnated with the chemical solution, and the chemical solution is then released from the cleaning surface of the sheet when the cleaning wet wipe 100 is used.

### ((4) Embossed parts)

As illustrated in FIGS. 1 and 2, embossed parts 20 which are parts where the sheet is compressed in the Z direction are arranged in the cleaning wet wipe 100 in order to improve wiping performance against contamination on a cleaning target surface by generating unevenness in the sheet and scraping off the contamination with the unevenness.

The embossed parts 20 have a thin and long oval shape with a short length in one direction and a narrow width and is formed into a so-called gourd shape having a narrowed portion at a substantially center in a long axis direction in a plan view as illustrated in FIG. 2, for example. The shape of the embossed parts 20 is not limited thereto, and various shapes such as polygonal shapes or shapes obtained by combining such shapes, for example, may be adopted. However, such a gourd shape is preferably adopted from the viewpoint of improving contamination scraping properties.

Such embossed parts 20 can be formed through heat embossing under the conditions of a temperature of 80°C to 200°C and an embossing pressure of 0.2 MPa to 1.0 MPa. In a case where the embossed parts 20 are formed through heat embossing, it is possible to use, as a projecting emboss roll, a projecting emboss roll with at least an outer peripheral surface made of carbon steel, stainless steel, a cured resin such as polypropylene or acrylonitrile butadiene styrene (ABS) resin, or the like, and among these, it is preferable to use a projecting emboss roll made of stainless steel from the viewpoint of durability and heat resistance.

Moreover, in a case where emboss working is performed by heat embossing, it is preferable to perform the emboss working before the process of impregnating the cleaning wet wipe 100 with the chemical solution from the viewpoint of easiness in application of the uneven shape.

### (a. Projecting embossed parts, recessed embossed parts)

As the embossed parts 20, projecting embossed parts 21 that have a shape projecting upward in the Z direction (on a side of a first surface of the cleaning wet wipe 100) and recessed embossed parts 22 that have a shape projecting downward (on a side of a second surface of the cleaning wet wipe 100) (that is, a shape recessed upward in the Z-direction) are formed. Note that in each drawing, the projecting embossed parts 21 are illustrated by solid lines and the recessed embossed parts 22 are illustrated by dashed lines.

The projecting embossed parts 21 are formed to 5 mm to 10 mm, or preferably 6 mm to 8 mm in the long axis direction, are formed to 2 mm to 5 mm, or preferably 3 mm to 4 mm in a short axis direction perpendicularly intersecting the long axis direction, and are formed to 0.5 mm to 2 mm, or preferably 0.7 mm to 1.5 mm in the Z direction (the height from an intermediate portion (which will be described later)). The recessed embossed parts 22 are formed upside down with respect to the projecting embossed parts 21 and with substantially the same shape, and is formed into a shape projecting downward in the Z direction in a sectional view.

### (b. Intermediate portion)

Intermediate portions are formed between the embossed parts 20 formed in the cleaning wet wipe 100. Since the intermediate portions are parts where the embossed parts 20 are not formed, the intermediate portions are located at a position that is lower than the projecting embossed parts 21 and higher than the recessed embossed parts 22 in the Z direction.

### (c. Emboss pattern)

In the cleaning wet wipe 100 according to the present embodiment, first emboss blocks 30 with a rhomboidal shape, in each of which a combination of the projecting embossed parts 21 and the recessed embossed parts 22 is arranged such that an angle formed by a first direction (the X direction in FIG. 2) perpendicularly intersecting a first side a and the long axis direction is 5° to 45°, or preferably 15° to 35°, continue from the first side a to a second side b to form an emboss block array 31, a plurality of emboss block arrays 31 are continuously arranged from a third side c to a fourth side d, and arrangement is made such that in a first emboss block array 31 and a second emboss block array 31 that are adjacent to each other, first emboss blocks 30 in the first emboss block array 31 overlap adjacent second emboss blocks 30 in the second emboss block array 31 in a second direction (the Y direction in FIG. 2) perpendicularly intersecting the first direction and at least one projecting embossed part 21 and at least one recessed embossed part 22 are present on a straight line extended perpendicularly to the fourth side d from an arbitrary point on the third side c.

### (d. Non-embossed portion)

As illustrated in FIG. 2, non-embossed portions 40 that are parts which are not compressed in the Z direction as compared with the parts where the embossed parts 20 are formed in the cleaning wet wipe 100 and which have raising nap are provided between the adjacent emboss blocks 30.

The non-embossed portions 40 can be formed by designing the projecting emboss roll for forming the embossed parts 20 to exclude the shape of the non-embossed portions 40, or alternatively, by slightly performing compression as compared with the compressed parts of the embossed parts 20 to an extent to which the raising nap remains.

It is possible to obtain the cleaning wet wipe 100 that reduces occurrence of wiping streaks and has excellent wiping properties by such non-embossed portions 40 being provided at a proportion of 25% to 50% with respect to the area of the cleaning wet wipe 100. Note that it is most preferable that the non-embossed portions 40 be provided at a proportion of 25% with respect to the area of the cleaning wet wipe 100.

Note that although the cleaning tool 200 is typically moved substantially perpendicularly to the X direction or the Y direction in a case where wiping is performed with the cleaning tool 200 with the cleaning wet wipe 100 attached thereto, there is a concern that in a case where the non-embossed portions 40 are formed in a straight line shape as illustrated in FIG. 2, wiping streaks may be likely to occur depending on an angle at which the cleaning wet wipe 100 is moved. Thus, it is more desirable that the emboss blocks 30 be arranged such that the non-embossed portions 40 are not on straight lines.

### (2. Description of effects)

The cleaning wet wipe 100 according to the present embodiment is provided with the emboss blocks 30 (emboss block arrays 31), in each of which the plurality of projecting embossed parts 21 that are embossed parts projecting from the first surface and the plurality of recessed embossed parts 22 that are embossed parts projecting from the second surface are formed.

Also, the cleaning wet wipe 100 according to the present embodiment is impregnated with the weakly alkaline chemical solution with a hydrogen ion index (pH) of 8.0 to 9.0.

With such a cleaning wet wipe 100, it is possible to remove sebum and oil stains adhering to the cleaning target surface by scraping off contamination on the cleaning target surfaces with the unevenness of the embossed parts 20 (the projecting embossed parts 21 and the recessed embossed parts 22) and to enable wiping of suitably wiping off the contamination.

It is possible to suitably remove sebum and oil contamination adhering to the cleaning target surface while suppressing a likelihood that the cleaning target surface such as a floor surface is damaged by the chemical solution with which the cleaning wet wipe 100 is impregnated being weakly alkaline.

In particular, the cleaning wet wipe 100 according to the present embodiment is impregnated with the chemical solution containing xanthoxylin which is an acarine repellent, and it is thus possible to apply the chemical solution to the cleaning target surface wiped with the cleaning wet wipe 100 and to impart the acarine repelling effect of xanthoxylin to the cleaning target surface.

In this manner, the cleaning wet wipe 100 according to the present embodiment can impart the acarine repelling effect to the cleaning target surface after being wiped clean, and it is thus possible to impart the acarine repelling effect to the cleaning target surface while wiping off oil contamination and the like adhering to the floor surface.

It is a matter of course that dirt and dust can also be suitably removed from the cleaning target surface by the unevenness of the embossed parts 20 (the projecting embossed parts 21 and the recessed embossed parts 22) of the cleaning wet wipe 100 capturing the dirt and the dust.

Also, according to the cleaning wet wipe 100 of the present embodiment, the embossed parts 20 are arranged as described above, and it is thus possible to improve wiping performance against contamination by the unevenness of the sheet and to obtain the following effects.

In other words, when the cleaning wet wipe 100 is attached to the cleaning tool 200 including the head portion 201 and wiping is performed, the cleaning tool 200 is typically moved in the first direction (the X direction in FIG. 2) or the second direction (the Y direction in FIG. 2). However, if the projecting embossed parts are arranged in series such that the projecting embossed parts are aligned in such a first direction or second direction, locations which are not wiped by the projecting embossed parts (so-called "wiping streaks") may be caused in the cleaning target surface, and a user who has visually recognized the wiping streaks may determine that the chemical solution has been used up and discard the sheet regardless of the chemical solution still remaining in the sheet, and unnecessarily use a lot of sheets.

On the contrary, in a case where the cleaning wet wipe 100 which has the emboss pattern as described above and includes at least one projecting embossed part 21 arranged to be present on the straight line extended perpendicularly to the fourth side d from an arbitrary point on the third side c is attached, the projecting embossed parts 21 have overlapping margins, and it is thus possible to reduce occurrence of wiping streaks when wiping is performed at least in the second direction (the Y direction in FIG. 2).

In addition, the projecting embossed parts 21 receive larger pressures than the non-embossed portions 40 when wiping is performed with the cleaning wet wipe 100 by providing the non-embossed portions 40 at a proportion of 25% to 50% with respect to the area of the cleaning wet wipe 100 between the emboss blocks 30 without providing the embossed parts 20 over the entire surface of the cleaning wet wipe 100, chemical solution releasing properties are thus improved, and it is possible to further reduce occurrence of wiping streaks.

Also, since scraping properties of the projecting embossed parts 21 are improved and dirt is likely to be accumulated in the non-embossed portions 40 by the projecting embossed parts 21 receiving larger pressures, it is possible to enhance dirt capturing properties. Moreover, regardless of the enhancement of the scraping properties of the projecting embossed parts 21 and the dirt capturing properties of the cleaning wet wipe 100, it is possible to suppress an increase in wiping resistance because the non-embossed portions 40 are unlikely to be grounded on the cleaning target surface due to the projecting embossed parts 21.

In addition, since the emboss blocks 30 have a rhomboidal shape and include embossed parts 20 arranged such that the angle formed by the first direction and the long axis direction is 5° to 45°, or preferably 15° to 35°, the emboss blocks 30 are inevitably arranged with deviation in the first direction of the cleaning wet wipe 100 when the plurality of emboss block arrays 31 continuously arranged from the first side a to the second side b are continuously arranged from the third side c to the fourth side d. Also, a margin occurs in the angle at which the user moves the cleaning wet wipe 100 when the user performs wiping.

Furthermore, since the embossed parts 20 have an oval shape and have a shape with a narrowed portion at substantially the center in the long axis direction, it is possible to enhance contamination scraping performance.

### Examples

Next, results of evaluating examples of the present embodiment and comparative examples will be described. Although the present invention will be specifically described below on the basis of the examples, the present invention is not limited thereto.

### (Production of chemical solution samples)

As chemical solutions for anti-acarine cleaning, chemical solutions in Example 1, Comparative Example 1, and Comparative Example 2 were prepared by adopting the components and blending (% by mass) shown in Table 1.

The chemical solution in Example 1 did not get clouded and was substantially transparent liquid.

The chemical solutions in Comparative Examples 1 and 2 were liquids that got clouded in a white color.

Note that each chemical solution is adjusted to be weakly alkaline as a chemical solution for cleaning of wiping off sebum and oil contamination.

**[Table 1]**

| | Example 1[%] | Comparative Example 1[%] | Comparative Example 2[%] |
|---|---|---|---|
| Purified water | 95.248 | 95.210 | 95.210 |
| Ethanol | 2.000 | 2.000 | 2.000 |
| Diethylene glycol monobutyl ether | 1.000 | 1.000 | 1.000 |
| Disinfectant/antiseptic | 1.000 | 1.000 | 1.000 |
| Sodium hydroxide (5% solution) | 0.200 | 0.200 | 0.200 |
| Glycine | 0.163 | 0.163 | 0.163 |
| Sodium chloride | 0.127 | 0.127 | 0.127 |
| Surfactant | 0.250 | 0.250 | 0.250 |
| Dibutyl sebacate | - | - | 0.035 |
| Benzyl salicylate | - | 0.030 | 0.015 |
| Benzyl benzoate | - | 0.020 | - |
| Xanthoxylin | 0.012 | - | - |
| pH | 8.37 | 8.21 | 8.48 |

Also, as a base paper sheet, a base paper sheet obtained by performing emboss working illustrated in FIG. 2 on a non-woven cloth that had a fiber blending ratio of PET/pulp/rayon/PP/PP·PE = 15/38/30/12/5 and a basis weight of 100 g/m² was used.

The base paper sheet was impregnated with 300% of each chemical solution, thereby producing three types of cleaning wet wipe samples (a sample in Example 1, a sample in Comparative Example 1, and a sample in Comparative Example 2).

### (Anti-acarine test method; production of test pieces)

A test of simulating wiping of a surface of a floor material that was often used as a wooden floor with the cleaning wet wipe 100 was conducted. Here, the simulation test was conducted using a floor material of 27 mm × 27 mm.

Specifically, splints with the same thickness as that of the floor material were mounted on left and right sides of the floor material of 27 mm × 27 mm, each cleaning wet wipe sample was placed on the splint on the right side, and a weight of 150 g was mounted on the sample.

Then, the cleaning wet wipe sample with the weight mounted thereon was moved to the splint on the right side in about 2 seconds and was then moved from the splint on the left side to the splint on the right side in about 2 seconds.

In this manner, mock wiping of causing the cleaning wet wipe sample on the floor material between the left and right splints to reciprocate once was conducted.

Here, the cleaning wet wipe sample was tied to a bottom of a 300 ml beaker with a rubber band, and the beaker with a weight adjusted to 150 g by pouring about 10 ml of water thereto was caused to reciprocate once. Note that 150 g of the weight was set to simulate wiping using the cleaning tool 200 as a floor wiper.

The floor material on which the mock wiping was conducted was used in the main test.

In this manner, five floor materials (test pieces) wiped with the cleaning wet wipe samples (the sample in Example 1, the sample in Comparative Example 1, and the sample in Comparative Example 2) impregnated with each of the chemical solutions were prepared.

The floor materials wiped with the sample in Example 1 were defined as test pieces A, the floor materials wiped with the sample in Comparative Example 1 were defined as test pieces B, and the floor materials wiped with the sample in Comparative Example 2 were defined as test pieces C.

### (Anti-acarine test method; main test)

The aforementioned test pieces on which mock wiping was conducted were used to perform a repellency test against house dust acarines in accordance with JIS L 1920 to check the repelling effect on each test piece. Note that a reference test using a blank (untreated floor material) was also conducted.

Here, five test pieces were prepared for each type (A, B, C, and blank), and the repellency test was performed five times.

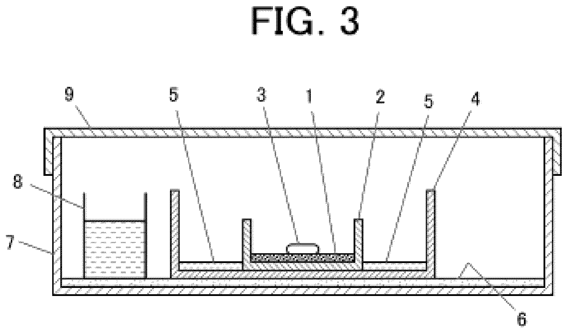

The test method (procedure) will be described (see Fig. 3).
1. Each test piece 1 within 1 hour after the mock wiping was laid on a glass petri dish (small petri dish) 2 with a diameter of 4 cm, and 50 mg of attracting bait 3 was placed at a center part of the test piece 1. As the attracting bait 3, attracting bait obtained by mixing and crushing equal amounts of mouse diet and beer yeast was used.
2. The glass petri dish (small petri dish) 2 with the test piece 1 laid thereon was installed on a glass petri dish (large petri dish) 4 with a diameter of 9 cm, and an acarine medium 5 including about 10,000 acarines was put and flattened around the small petri dish 2 inside the large petri dish 4.
3. The large petri dish 4 with the small petri dish 2 and the acarine medium 5 placed therein was set inside a tightly closed container 7 in which a sticky mat 6 was laid. Also, a glass container 8 with saturated saline water placed therein was set inside the tightly closed container 7 to adjust a humidity.
4. A lid 9 was put on the tightly closed container 8, and the tightly closed container was left still for 24 hours in an incubator at 25°C.
5. The number of acarines entering the small petri dish 2 (on the test piece 1) was counted 24 hours later. Then, the acarine repellency rate was calculated by Equation (1) below. $Repellency rate \left(%\right) = \left(\left(b-a\right)/b\right) \times 100$ (1)
   a; The number of acarines in the small petri dish with the test piece placed therein
   b; The number of acarines in the small petri dish with the blank (untreated floor material) placed therein

### (Test Results)

The acarine repellency rate (evaluation result) of each test piece will be shown below.

The repellency rate was calculated on the basis of the total number of acarines counted in the repellency test conducted five times.

In other words, a in Equation (1) is the total number of acarines measured in the repellency test conducted five times for each test piece (A, B, C), and b in Equation (1) is the total number of acarines counted in the repellency test conducted five times on the untreated floor material (blank).
- Test piece A (Example 1): repellency rate of 54.8%
- Test piece B (Comparative Example 1): repellency rate of 31.1%
- Test piece C (Comparative Example 2): repellency rate of 45.0%

It was possible to ascertain from the results that an anti-acarine effect (repelling effect) of the test piece A on which the mock wiping was performed with the sheet sample impregnated with the chemical solution in Example 1 containing xanthoxylin as an acarine repellent was higher than those of the test pieces B and C on which the mock wiping was performed with the sheet samples impregnated with the chemical solutions in Comparative Examples 1 and 2 containing organic acid esters (benzyl benzoate, benzyl salicylate, benzyl sebacate) as acarine repellents.

Since organic acid esters are hardly soluble, the present inventors expect that it is difficult to develop organic acid esters as acarine repellents to wet-type cleaning wet wipes, and it is also possible to ascertain that the organic acid esters were not completely dissolved in the chemical solutions on the basis of the fact that the chemical solutions in Comparative Examples 1 and 2 got clouded in a white color as described above.

It is considered that in the state where the chemical solutions containing organic acid esters got clouded in a white color and when organic acid ester was not dissolved in the chemical solution, the natures and the quality of the chemical solutions were not stabilized, organic acid esters that were acarine repellents were not sufficiently applied to the test pieces B and C on which the mock wiping was performed, and the acarine repellency rates were thus low.

Also, it is considered that the acarine repellency rate was low because organic acid esters mixed in the weakly alkaline chemical solutions caused hydrolysis, the content of organic acid esters decreased, and drug efficacy of the chemical solutions was lowered.

On the contrary, it is possible to ascertain that xanthoxylin as an acarine repellent was dissolved in the chemical solution in Example 1 on the basis of the fact that the chemical solution did not get clouded and was substantially transparent.

It is considered that the acarine repelling effect of the test piece A treated with the chemical solution in Example 1 was higher than those of the test pieces B and C treated with the chemical solutions in Comparative Examples 1 and 2 because xanthoxylin was dissolved in the chemical solution in Example 1 and the nature and the quality of the chemical solution were stabilized.

Note that the present inventors confirmed during an experiment of chemical solution adjustment that xanthoxylin was dissolved in a cleaning chemical solution for wiping off sebum and oil contaminations although xanthoxylin was also hardly soluble in water.

Also, the present inventors discovered that it was possible to dissolve xanthoxylin in a water-based chemical solution by using ethanol and a surfactant together since xanthoxylin had compatibility with ethanol and a surfactant contained in the cleaning chemical solution and achieved the present invention.

In other words, the present inventors realized the cleaning wipe 100 capable of performing wiping of suitably removing contaminations that adhered to a cleaning target surface and imparting an effect of repelling house dust acarines to the cleaning target surface after being wiped clean by enabling xanthoxylin (acarine repellent) that was not decomposed by the weakly alkaline chemical solution with which the cleaning wipe 100 for the purpose of wiping off sebum and oil contaminations was impregnated to be dissolved in the chemical solution.

As described above, according to the cleaning wet wipe 100 adjusted to be weakly alkaline at a pH 8.0 to 9.0 and impregnated with the chemical solution in which xanthoxylin is dissolved, it is possible to suitably remove sebum and oil contaminations adhering to the cleaning target surface and to impart the effect of repelling house dust acarines to the cleaning target surface after being wiped clean by using the cleaning wet wipe 100.

Note that although the aspect in which cleaning is performed by attaching the cleaning wet wipe 100 to the cleaning tool 200 has been described as an example in the above embodiment, the present invention is not limited thereto, and wiping may be performed with the cleaning wet wipe 100 held in a hand without using the cleaning tool 200.

It is a matter of course that other specific detailed structures and the like can also be appropriately modified.

### Industrial Applicability

The present invention is configured as described above and can thus be used as a cleaning wet wipe.

### Reference Signs List

- 100: cleaning wet wipe
- 20: embossed part
- 21: projecting embossed part
- 22: recessed embossed part
- 30: emboss block
- 31: emboss block array
- 40: non-embossed portion
- 200: cleaning tool
- 201: head portion
- 202: handle portion
- a: first side
- b: second side
- c: third side
- d: fourth side

## Claims

1. A cleaning wet wipe comprising:
a base paper sheet; and
a chemical solution,
wherein the cleaning wet wipe is obtained by impregnating the base paper sheet with the chemical solution, **characterized in that**
the chemical solution contains at least xanthoxylin.

2. The cleaning wet wipe according to claim 1, wherein the chemical solution includes water as a solvent and contains at least one of ethanol and a surfactant.

3. The cleaning wet wipe according to claim 1, wherein the chemical solution is adjusted to be weakly alkaline.

4. The cleaning wet wipe according to any one of claims 1 to 3, wherein a plurality of projecting embossed parts which are embossed parts projecting from a first surface and a plurality of recessed embossed parts which are embossed parts projecting from a second surface are formed in the base paper sheet.

## Patentansprüche

1. Reinigendes Feuchttuch, umfassend:
ein Grundpapierblatt; und
eine chemische Lösung,
wobei das reinigende Feuchttuch durch Imprägnieren des Grundpapierblatts mit der chemischen Lösung erlangt wird, **dadurch gekennzeichnet, dass** die chemische Lösung mindestens Xanthoxylin enthält.

2. Reinigendes Feuchttuch nach Anspruch 1, wobei
die chemische Lösung Wasser als Lösungsmittel beinhaltet und mindestens eines von einem Ethanol und einem Tensid enthält.

3. Reinigendes Feuchttuch nach Anspruch 1, wobei
die chemische Lösung auf schwach alkalisch eingestellt ist.

4. Reinigendes Feuchttuch nach einem der Ansprüche 1 bis 3, wobei eine Vielzahl von hervorstehenden Prägeabschnitten Prägeabschnitte, die von einer ersten Oberfläche hervorstehen, und eine Vielzahl von vertieften Prägeabschnitten, die Prägeabschnitte sind, die von einer zweiten Oberfläche hervorstehen, in dem Grundpapierblatt gebildet sind.

## Revendications

1. Lingette humide nettoyante comprenant :
une feuille de papier de base ; et
une solution chimique,
dans laquelle la lingette humide nettoyante est obtenue en imprégnant la feuille de papier de base avec la solution chimique, **caractérisée en ce que** la solution chimique contient au moins de la xanthoxyline.

2. Lingette humide nettoyante selon la revendication 1, dans laquelle la solution chimique inclut de l'eau en tant que solvant et contient au moins l'un d'éthanol et d'un tensioactif.

3. Lingette humide nettoyante selon la revendication 1, dans laquelle la solution chimique est ajustée de manière à être faiblement alcaline.

4. Lingette humide nettoyante selon l'une quelconque des revendications 1 à 3, dans laquelle une pluralité de parties gaufrées en saillie, qui sont des parties gaufrées qui font saillie depuis une première surface, et une pluralité de parties gaufrées en renfoncement, qui sont des parties gaufrées qui font saillie depuis une deuxième surface, sont formées dans la feuille de papier de base.
